(19) Europäisches Patentamt
European Patent Office
Office européen des brevets

(11) EP 2 641 931 B1

(12) **EUROPEAN PATENT SPECIFICATION**

(45) Date of publication and mention of the grant of the patent:
**21.03.2018 Bulletin 2018/12**

(21) Application number: **11841529.8**

(22) Date of filing: **17.11.2011**

(51) Int Cl.:
***C08J 5/18*** *(2006.01)* ***C08G 69/28*** *(2006.01)*
***C09D 177/06*** *(2006.01)*

(86) International application number:
**PCT/JP2011/076475**

(87) International publication number:
**WO 2012/067172 (24.05.2012 Gazette 2012/21)**

# (54) SEMI-AROMATIC POLYAMIDE FILM, AND PROCESS FOR PRODUCTION THEREOF

HALBAROMATISCHER POLYAMIDFILM UND HERSTELLUNGSVERFAHREN DAFÜR

FILM DE POLYAMIDE SEMI-AROMATIQUE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.11.2010 JP 2010256890**

(43) Date of publication of application:
**25.09.2013 Bulletin 2013/39**

(73) Proprietors:
- **Unitika, Ltd.**
  **Amagasaki-shi, Hyogo 660-0824 (JP)**
- **Kuraray Co., Ltd.**
  **Okayama 710-0801 (JP)**

(72) Inventors:
- **ANADA, Arihiro**
  **Kyoto 611-0021 (JP)**
- **TAMURA, Kozo**
  **Ibaraki 305-0841 (JP)**
- **MUNESAWA, Yuji**
  **Tokyo 100-8115 (JP)**

(74) Representative: **Vigand, Philippe et al**
**Novagraaf International SA**
**Chemin de l'Echo 3**
**1213 Onex - Genève (CH)**

(56) References cited:
**EP-A1- 1 860 134**
**EP-A1- 2 025 718**
**JP-A- 11 156 920**
**JP-A- 2000 186 141**
**JP-A- 2003 105 107**
**JP-A- 2003 313 352**
**JP-A- 2003 335 938**
**JP-A- 2010 043 175**
**US-A1- 2004 126 523**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 641 931 B1

## Description

### Technical Field

The present invention relates to a semi-aromatic polyamide film with reduced fish-eyes, which are exterior appearance defects, and a process for the production thereof.

### Background Art

A semi-aromatic polyamide resin, which is a polycondensation product of an aliphatic diamine and phthalic acid, is excellent in various performances including heat resistance, as compared with an aliphatic polyamide resin. Accordingly, developments for the use of such semi-aromatic polyamides in applications to films and molded products have recently been promoted. JP09-012714A describes, as a semi-aromatic polyamide resin, nylon 9T made of an aliphatic diamine having 9 carbon atoms and terephthalic acid. Nylon 9T has a high melting point falling in the vicinity of 300°C, and is comparatively low in water absorbability. Accordingly, the use of nylon 9T in various industrial applications has been attracting attention.

Nylon 9T has such properties as described above, and hence it is possible for the film of nylon 9T to establish the compatibility between the heat resistance and the dimensional stability, in contrast to the fact that it has been difficult for conventional thermoplastic films to establish such compatibility. Accordingly, the development of nylon 9T as the material for films has been actively pursued. In particular, it is expected to apply the film obtained from nylon 9T to the fields of so-called industrial films such electric and electronic components and optical films.

On the other hand, at the present time, polyethylene terephthalate (PET) film is widely used in various industrial applications. The reasons for the wide use of PET film are such that the recent improvement of the quality of PET film enables industrial production and practical application of PET film extremely low in the level of the occurrence of defects such as fish-eyes (exterior appearance defects due to agglomerate foreign matter). For the use in practical industrial applications, the film obtained from nylon 9T is also required to be extremely low in the level of the occurrence of the defects such as fish-eyes in the film.

However, as has been known, when a semi-aromatic polyamide resin typified by nylon 9T is formed into a film by a heat melting step, an undissolved or unmolten gel-like foreign matter tends to be generated in the heat melting step. In particular, when a semi-aromatic polyamide resin having a melting point falling in the vicinity of 300°C is used, the melt processing substantially requires a processing at a temperature as high as 300°C or higher. Unfortunately, in a film obtained by film formation under such a high temperature condition, a large number of fish-eyes derived from the gel-like foreign matter are formed.

JP2000-186141A discloses a production of a film in which a semi-aromatic polyamide resin made of an aliphatic diamine having 9 to 12 carbon atoms and terephthalic acid is used. However, also when a film is formed by the method disclosed in JP2000-186141A, a large number of fish-eye-like defects due to, for example, gel-like foreign matter are generated in the obtained film. Films having such exterior appearance defects involve severe disadvantages associated with the practicability as films for industrial applications.

### Summary of Invention

### Technical Problem

For the purpose of solving such problems as described above, an object of the present invention is the provision of a semi-aromatic polyamide film in which the occurrence of fish-eyes is reduced, and the high quality intrinsically possessed by the semi-aromatic polyamide resin is maintained. Furthermore, another object of the present invention is the provision of a process for the industrial production of such a film.

### Solution to Problem

The present inventor made a diligent investigation for the purpose of solving such problems as described above, consequently has perfected the present invention by discovering that the foregoing objects are achieved.

Specifically, the gist of the present invention is as follows.

(1) A semi-aromatic polyamide film including a semi-aromatic polyamide resin including a dicarboxylic acid mainly composed of terephthalic acid and a diamine mainly composed of an aliphatic diamine having 9 carbon atoms, wherein the number density of fish-eyes of 0.01 $mm^2$ or more in size present in the film is 100/1000 $cm^2$ or less.

(2) The semi-aromatic polyamide film according to (1), wherein the semi-aromatic polyamide resin is a resin prepared

by polymerization using a phosphorous acid catalyst.

(3) The semi-aromatic polyamide film according to (1) or (2), further including a phosphorus-based heat stabilizer.

(4) The semi-aromatic polyamide film according to (3), wherein the phosphorus-based heat stabilizer is a compound represented by the following general formula (1) :

[Formula 1]

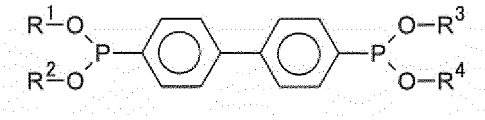

(I)

(in the formula, $R^1$ to $R^4$ each independently represent a hydrogen atom, a 2,4-di-tert-butyl-5-methylphenyl group or a 2,4-di-tert-butylphenyl group.)

(5) The semi-aromatic polyamide film according to (4), wherein $R^1$ to $R^4$ of the compound represented by the foregoing general formula (1) are all a 2,4-di-tert-butyl-5-methylphenyl group.

(6) The semi-aromatic polyamide film according to any one of (1) to (5), further including a hindered phenol heat stabilizer.

(7) The semi-aromatic polyamide film according to (6), wherein the hindered phenol heat stabilizer has a thermal decomposition temperature at 5% weight loss of 320°C or higher as measured with a thermogravity analyzer.

(8) The semi-aromatic polyamide film according to (6) or (7), wherein the hindered phenol heat stabilizer has an amide group.

(9) The semi-aromatic polyamide film according to any one of (1) to (8), further including a bifunctional type heat stabilizer.

(10) A process for the production of the semi-aromatic polyamide film according to any one of (1) to (9), wherein a molten polymer is obtained by melting the semi-aromatic polyamide resin, the molten polymer is made to pass through a metal sintered filter having an absolute filtration diameter of 60 μm or less, and then the molten resin is formed into a film shape.

(11) The process for the production of the semi-aromatic polyamide film, according to (10), wherein a metal fiber sintered filter or a metal powder sintered filter is used as the metal sintered filter.

Advantageous Effects of Invention

According to the present invention, a semi-aromatic polyamide film being reduced in fish-eyes, exterior appearance and having a high quality can be provided. Accordingly, the semi-aromatic polyamide film of the present invention can be suitably used in the applications to, for example, industrial materials, engineering materials and household articles.

Furthermore, according to the present invention, such a semi-aromatic polyamide film as described above can be industrially efficiently produced.

Description of Embodiments

Hereinafter, the present invention is described in detail.

The semi-aromatic polyamide film of the present invention is a film including a semi-aromatic polyamide resin (generally referred to as nylon 9T) including a dicaboxylic acid component mainly composed of terephthalic acid and a diamine component mainly composed of an aliphatic diamine having 9 carbon atoms.

First, the semi-aromatic polyamide resin used in the present invention is described.

The dicaboxylic acid component constituting the semi-aromatic polyamide resin is required to include terephthalic acid as the main component. The proportion of terephthalic acid in the dicaboxylic acid component is preferably 60 to 100 mol%, more preferably 70 to 100 mol% and furthermore preferably 85 to 100 mol%. When the proportion of terephthalic acid is less than 60 mol% in the dicaboxylic acid component, unpreferably the heat resistance and the low water absorbability of the obtained film are degraded in some cases.

Examples of the dicaboxylic acid component, other than terephthalic acid, included in the dicaboxylic acid component constituting the semi-aromatic polyamide resin include: aliphatic dicarboxylic acids such as oxalic acid, malonic acid, succinic acid, glutaric acid, adipic acid, sebacic acid, dodecanedioic acid, tetradecanedioic acid and octadecanedioic acid: and aromatic dicarboxylic acids such as 1,4-naphthalenedicarboxylic acid, 1,3-naphthalenedicarboxylic acid, 1,2-naphthalenedicarboxylic acid and isophthalic acid.

The diamine component of the semi-aromatic polyamide resin is required to include as the main component an aliphatic diamine having 9 carbon atoms. The proportion of the aliphatic diamine having 9 carbon atoms in the diamine

component is preferably 60 to 100 mol%, more preferably 75 to 100 mol% and furthermore preferably 90 to 100 mol%. When the proportion of the aliphatic diamine having 9 carbon atoms is less than 60 mol%, unpreferably the heat resistance, the low water absorbability and the chemical resistance of the obtained film are degraded in some cases.

Examples of the aliphatic diamine having 9 carbon atoms include: linear aliphatic diamines such as 1,9-nonanediamine; and branched aliphatic diamines such as 2-methyl-1,8-octanediamine and 4-methyl-1,8-octanediamine. These may be used each alone or in combinations of two or more thereof. Among the foregoing diamines, it is preferable to use 1,9-nonanediamine and 2-methyl-1,8-octanediamine in combination from the viewpoint of the moldability.

Examples of the diamine, other than the aliphatic diamine having 9 carbon atoms, included in the diamine component constituting the semi-aromatic polyamide include: linear aliphatic diamines such as 1,4-butanediamine, 1,5-pentanediamine, 1,6-hexanediamine, 1,7-heptanediamine, 1,8-octanediamine, 1,10-decanediamine, 1,11-undecanediamine and 1,12-dodecanediamine; branched aliphatic diamines such as 5-methyl-1,9-nonanediamine; alicyclic diamines such as isophoronediamine, norbornane dimethylamine and tricyclodecane dimethylamine; and aromatic diamines such as phenylenediamine.

With the semi-aromatic polyamide resin, lactams such as $\varepsilon$-caprolactam, $\zeta$-enantholactam, $\eta$-capryl lactam and $\omega$-laurolactam may be copolymerized within the range not impairing the object of the present invention.

Among the semi-aromatic polyamide resins obtained by the foregoing combinations of the monomers, from the viewpoint of heat resistance and moldability, a semi-aromatic polyamide resin is preferable which includes the dicaboxylic acid component composed only of terephthalic acid and the diamine component including 1,9-nonanediamine and 2-methyl-1,8-octanediamine, in a content of 60 to 100 mol% in the diamine component.

In the foregoing semi-aromatic polyamide resin, the copolymerization ratio (molar ratio), (1,9-nonanediamine)/(2-methyl-1,8-octanediamine), between 1,9-nonanediamine and 2-methyl-1,8-octanediamine is preferably 50/50 to 100/0, more preferably 70/30 to 100/0 and furthermore preferably 75/25 to 95/5. The semi-aromatic polyamide resin using 1,9-nonanediamine and 2-methyl-1,8-octanediamine in combination in the foregoing ratio can be formed into a film excellent in heat resistance and low water absorbability.

The types and the compositions of the monomers, constituting the semi-aromatic polyamide resin, are preferably selected in such a way that the melting point (hereinafter, abbreviated as "Tm" in some cases) of the obtained semi-aromatic polyamide resin falls within a range from approximately 280 to 350°C. By setting of the Tm of the semi-aromatic polyamide resin so as to fall the foregoing range, the thermal decomposition of the semi-aromatic polyamide resin when processed into a film can be suppressed. When the Tm of the semi-aromatic polyamide resin is lower than 280°C, the heat resistance of the obtained film becomes insufficient in some cases. On the other hand, when the Tm exceeds 350°C, the thermal decomposition of the semi-aromatic polyamide resin occurs in some cases at the time of production of a film from the semi-aromatic polyamide resin.

The limiting viscosity of the semi-aromatic polyamide resin is preferably 0.8 to 2.0 dl/g and more preferably 0.9 to 1.8 dl/g. By setting the limiting viscosity of the semi-aromatic polyamide resin so as to fall within the foregoing range, a film excellent in mechanical properties can be obtained. When the limiting viscosity of the semi-aromatic polyamide resin is less than 0.8 dl/g, it is difficult in some cases to maintain the film shape after formation into a film. On the other hand, when the limiting viscosity of the semi-aromatic polyamide resin exceeds 2.0 dl/g, in some case it becomes difficult for the film to adhere to the cooling roll at the time of the film production to degrade the exterior appearance of the film.

As the semi-aromatic polyamide resin, commercially available products can be suitably used. Examples of such a commercially available product include "Genestar (trade name)" manufactured by Kuraray Co., Ltd.

Next, the process for the production of the semi-aromatic polyamide resin used in the present invention is described. The semi-aromatic polyamide resin can be produced by any process known as a process for the production of a crystalline polyamide resin. Examples of such a process include: a solution polymerization process or an interfacial polymerization process using as the starting materials an acid chloride and a diamine component; a process in which a prepolymer is produced by using as the starting materials a dicaboxylic acid component and a diamine component, and the resulting prepolymer is converted into a higher-molecular-weight polymer by solution polymerization or solid phase polymerization.

The prepolymer can be obtained, for example, by heat-polymerizing at a temperature of 200 to 250°C a nylon salt prepared by simultaneously mixing the diamine component, the dicaboxylic acid component and a polymerization catalyst.

The limiting viscosity of the prepolymer is preferably 0.1 to 0.6 dl/g. The limiting viscosity of the prepolymer made to fall within the foregoing range results in an advantage such that in the successive solid phase polymerization or melt polymerization, the collapse of the molar balance between the carboxyl group in the dicaboxylic acid component and the amino group in the diamine component is prevented, and thus, the polymerization rate can be increased. When the limiting viscosity of the prepolymer is less than 0.1 dl/g, the polymerization time is made longer, and the productivity becomes poor in some cases. On the other hand, when the limiting viscosity of the prepolymer exceeds 0.6 dl/g, the obtained semi-aromatic polyamide resin is colored in some cases.

The solid phase polymerization of the prepolymer is preferably performed under reduced pressure or in a flow

of an inert gas. The temperature of the solid phase polymerization is preferably 200 to 280°C. The temperature of the solid phase polymerization set to fall within the foregoing range allows the coloration or the gelation of the obtained semi-aromatic polyamide resin to be suppressed. The temperature of the solid phase polymerization lower than 200°C makes the polymerization time longer and hence the productivity is poor in some cases. On the other hand, the temperature of the solid phase polymerization higher than 280°C develops coloration or gelation in the obtained semi-aromatic polyamide resin in some cases.

The melt polymerization of the prepolymer is preferably performed at a temperature of 350°C or lower. The polymerization temperature higher than 350°C promotes the decomposition or the thermal degradation of the semi-aromatic polyamide resin in some cases. Accordingly, a film obtained from such a semi-aromatic polyamide resin is poor in strength or exterior appearance in some cases. The melt polymerization includes the melt polymerization using a melt extruder.

In the polymerization of the semi-aromatic polyamide resin, a polymerization catalyst is used. It is preferable to use a phosphorus-based catalyst as the polymerization catalyst from the viewpoint of the reaction rate or the economic efficiency. Examples of the phosphorus-based catalyst include: hypophosphorous acid, phosphorous acid, phosphoric acid, and the salts of these acids (for example, sodium hypophosphite) or the esters of these acids. These may be used each alone or in combinations of two or more thereof.

Above all, a semi-aromatic polyamide resin obtained by the polymerization using phosphorous acid as the polymerization catalyst is preferable. As compared to the case where the semi-aromatic polyamide resins polymerized by using other polymerization catalysts (for example, hypophosphorous acid catalyst), the use of phosphorous acid as the polymerization catalyst can suppress the rise of the filtration pressure in the filtration by using a filter, in the film formation. The effect achieved by the suppression of the filtration pressure rise is described later.

The use of the semi-aromatic polyamide resin obtained by polymerization using phosphorous acid as the catalyst allows the gelation itself of the obtained resin to be suppressed. Consequently, the occurrence of fish-eyes is suppressed.

The content of the polymerization catalyst in the obtained semi-aromatic polyamide resin is preferably 0.01 to 5% by mass, more preferably 0.05 to 2% by mass and furthermore preferably 0.07 to 1% by mass in relation to the total amount of the dicaboxylic acid component and the diamine component. The content of the polymerization catalyst set to fall within such a range as described above allows the semi-aromatic polyamide resin to be efficiently polymerized while the degradation of the semi-aromatic polyamide resin is being suppressed. The content of the polymerization catalyst of less than 0.01% by mass does not develop the catalysis in some cases. On the other hand, the content of the polymerization catalyst of more than 5% by mass causes disadvantage in terms of economic efficiency in some cases.

Furthermore, if necessary, a terminal blocking agent may be used together with the diamine component, the dicaboxylic acid component and the polymerization catalyst. Such a terminal blocking agent is not particularly limited as long as the terminal blocking agent is a monofunctional compound having reactivity with the amino group or the carboxyl group at the terminal of the semi-aromatic polyamide resin. Examples of the terminal blocking agent include monocarboxylic acids, monoamines, acid anhydrides, monoisocyanates, monoacid halides, monoesters and monoalcohols.

Above all, monocarboxylic acids or monoamines are preferable from the viewpoint of the reactivity and the stability of the blocked terminal group. From the viewpoint of the easiness in handling, monocarboxylic acids are more preferable. Examples of the monocarboxylic acids include: acetic acid, propionic acid, butyric acid, valeric acid, caproic acid, caprylic acid, lauric acid, tridecylic acid, myristic acid, palmitic acid, stearic acid and benzoic acid.

The amount used of the terminal blocking agent can be appropriately selected according to the reactivity of the terminal blocking agent used, the boiling point, the reactor and the reaction conditions. The amount used of the terminal blocking agent is preferably 0.1 to 15 mol% in relation to the total number of moles of the dicaboxylic acid component and the diamine component from the viewpoint of the regulation of the molecular weight and the suppression of the decomposition of the resin.

In the semi-aromatic polyamide resin used in the present invention, the terminal groups of the molecular chain are preferably blocked with such a terminal blocking agent as described above. The proportion of the blocked terminal groups in relation to the total amount of the terminal groups is preferably 10 mol% or more, more preferably 40 mol% or more and furthermore preferably 70 mol% or more. By setting the proportion of the blocked terminal groups at 10 mol% or more, the decomposition of the resin during melt molding or the increase of the molecular weight with the progress of the condensation can be suppressed. The occurrence of bubbles due to the decomposition of the resin is also suppressed, and hence the exterior appearance of the film obtained from the semi-aromatic polyamide resin can be made excellent.

Next, the semi-aromatic polyamide film of the present invention is described.

In the semi-aromatic polyamide film of the present invention, including such a semi-aromatic polyamide resin as described above, the degradation of the exterior appearance due to fish-eyes is prevented. More specifically, the number density of the fish-eyes of 0.01 $mm^2$ or more in size is required to be 100/1000 $cm^2$ or less, is preferably 50/1000

$cm^2$ or less and furthermore preferably 20/1000 $cm^2$ or less. When the number density of the fish-eyes of 0.01 $mm^2$ or more in size in the semi-aromatic polyamide film exceeds 100/1000 $cm^2$, the low quality of the exterior appearance of the obtained film becomes conspicuous to impair the commercial value of the film.

In the semi-aromatic polyamide film of the present invention, a heat stabilizer is preferably included for the purpose of increasing the heat stability of the film at the time of film formation, and preventing the degradation of the strength or the elongation rate of the film, and also for the purpose of preventing at the time of use the degradation of the film due to oxidation or decomposition. Examples of the heat stabilizer include hindered phenol heat stabilizers, hindered amine heat stabilizers, phosphorus-based heat stabilizers, sulfur-based heat stabilizers and bifunctional type heat stabilizers.

Examples of the hindered phenol heat stabilizer include: Irganox 1010 (manufactured by BASF Japan Ltd., chemical formula name: pentaerythritol tetrakis[3-(3,5-di-tert-butyl-4-hydroxyphenyl)propionate, Irganox 1076 (registered trademark, manufactured by BASF Japan Ltd., chemical formula name: octadecyl-3-(3,5-di-tert-butyl-4-hydroxyphenyl) propionate), Cyanox 1790(registered trademark, manufactured by Cyanamide Co., chemical formula name: 1,3,5-tris(4-t-butyl-3-hydroxy-2,6-dimethylbenzyl)isocyanuric acid), Irganox 1098 (registered trademark, manufactured by BASF Japan Ltd., chemical formula name: N,N'-(hexane-1,6-diyl)bis[3-(3,5-di-tert-butyl-4-hydroxyphenyl)propione amide]), and Sumilizer GA-80(registered trademark, manufactured by Sumitomo Chemical Co., Ltd., chemical formula name: 3,9-bis[2-{3-(3-t-butyl-4-hydroxy-5-methylphenyl)propionyloxy}-1,1-dimethylethyl]-2,4,8,10-tetraoxaspiro[5.5]undecane.

Examples of the hindered amine heat stabilizer include Nylostab S-EED (registered trademark, manufactured by Clariant (Japan) K.K., chemical formula name: 2-ethyl-2'-ethoxy-oxal anilide).

Examples of the phosphorus-based heat stabilizer include: Irgafos 168 (registered trademark, manufactured by BASF Japan Ltd., chemical formula name: tris(2,4-di-tert-butylphenyl) phosphite), Irgafos 12 (registered trademark, manufactured by BASF Japan Ltd., chemical formula name: 6,6',6''-[nitrilotris(ethyleneoxy)]tris(2,4,8,10-tetra-tert-butyldibenzo[d,f][1,3,2]dioxaphosphepine), Irgafos 38 (registered trademark, manufactured by BASF Japan Ltd., chemical formula name: bis(2,4-bis(1,1-dimethylethyl)-6-methylphenyl)ethyl ester phosphorous acid), ADKSTAB 329K (registered trademark, manufactured by Asahi Denka Kogyo Co., Ltd., chemical formula name: tris(mono-dinonylphenyl) phoshpite, ADKSTAB PEP36 (registered trademark, manufactured by Asahi Denka Kogyo Co., Ltd., chemical formula name: bis(2,6-di-tert-butyl-4-methylphenyl)pentaerythritol diphosphite), Hostanox P-EPQ (manufactured by Clariant K.K., chemical formula name: tetrakis(2,4-di-tert-butylphenyl)-4,4'-biphenylene diphosphonite, GSY-P101 (registered trademark, manufactured by Sakai Chemical Industry Co., Ltd., chemical formula name: tetrakis(2,4-di-tert-butyl-5-methylphenyl)-4,4'-biphenylene diphosphonite, and Sumilizer GP (registered trademark, manufactured by Sumitomo Chemical Co., Ltd., chemical formula name: 6-[3-(3-tert-butyl-4-hydroxy-5-methylphenyl)propoxy]-2,4,8,10-tetra-tert-butyldibenz[d,f][1.3.2]-dioxaphosphepine).

Examples of the sulfur-based heat stabilizer include: DSTP (Yoshitomi) (registered trademark, manufactured by Yoshitomi Pharmaceutical Industries, Ltd., chemical formula name: distearyl thiodipropionate), Seenox 412S (registered trademark, manufactured by Shipro Kasei Kaisha, Ltd., chemical formula name: pentaerythritol tetrakis-(3-dodecylthiopropionate)), Cyanox 1212 (registered trademark, manufactured by Cyanamide Co., chemical formula name: lauryl stearyl thiodipropionate).

Examples of the bifunctional type heat stabilizer include: Sumilizer GM (registered trademark, manufactured by Sumitomo Chemical Co., Ltd., chemical formula name: 2-tert-butyl-6-(3-tert-butyl-2-hydroxy-5-methylbenzyl)-4-methylphenyl acrylate) and Sumilizer GS (registered trademark, manufactured by Sumitomo Chemical Co., Ltd., chemical formula name: 2-[1-(2-hydroxy-3,5-di-tert-pentylphenyl)ethyl]-4,6-di-tert-pentylphenyl acrylate).

Above all, from the viewpoint of preventing the filter pressure rise at the time of film formation, the phosphorus-based heat stabilizers are preferable, the phosphorus-based heat stabilizers represented by the general formula (I) are more preferable, and the phosphorus-based heat stabilizers in which $R^1$ to $R^4$ are all a 2,4-di-tert-butyl-5-methylphenyl group are furthermore preferable.

[Formula 1]

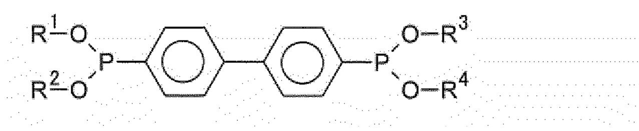

(I)

In the foregoing formula (I), $R^1$ to $R^4$ each independently represent a 2,4-di-tert-butyl-5-methylphenyl group or a 2,4-di-tert-butylphenyl group.

Examples of the phosphorus-based heat stabilizer represented by the general formula (I) include Hostanox P-EPQ and GSY-P101.

From the viewpoint of preventing the degradation of the film strength, hindered phenol heat stabilizers are preferable. The thermal decomposition temperature of the hindered phenol heat stabilizer is preferably 320°C or higher and more preferably 350°C or higher. Examples of the hindered phenol heat stabilizers having a thermal decomposition temperature of 320°C or higher include Sumilizer GA-80. When a hindered phenol heat stabilizer has an amide bond, the hindered phenol heat stabilizer can prevent the degradation of the film strength. Examples of the hindered phenol heat stabilizer having an amide bond include Irganox 1098. When the hindered phenol heat stabilizer is used in combination with a bifunctional type heat stabilizer, the degradation of the film strength can be further reduced.

These heat stabilizers may be used each alone or in combinations of two or more thereof. For example, a combinational use of a hindered phenol heat stabilizer and a phosphorus-based heat stabilizer can prevent the pressure rise of the filter at the time of film formation, and can also prevent the degradation of the film strength. Alternatively, a combinational use of a hindered phenol heat stabilizer, a phosphorus-based heat stabilizer and a bifunctional type heat stabilizer can prevent the pressure rise of the filter at the time of film formation, and can further reduce the degradation of the film strength.

As the combination of the hindered phenol heat stabilizer and the phosphorus-based heat stabilizer, a combination of Hostanox P-EPQ or GSY-P101 with Sumilizer GA-80 or Irganox 1098 is preferable. As the combination of the hindered phenol heat stabilizer, the phosphorus-based heat stabilizer and the bifunctional type heat stabilizer, a combination of Hostanox P-EPQ or GSY-P101, Sumilizer GA-80 or Irganox 1098, and Sumilizer GS is preferable. A combination of GSY-P101, Sumilizer GA-80-and Sumilizer GS is more preferable.

The content of the heat stabilizer in the semi-aromatic polyamide film of the present invention is preferably 0.01 to 2 parts by mass and more preferably 0.05 to 1 part by mass in relation to 100 parts by mass of the semi-aromatic polyamide resin. When the content of the heat stabilizer is less than 0.01 part by mass, the decomposition of the semi-aromatic polyamide resin cannot be suppressed in some cases. On the other hand, the content of the heat stabilizer exceeding 2 parts by mass results in an economic disadvantage in some cases. When two or more heat stabilizers are used in combination, the content of each of the heat stabilizers and the total content of the heat stabilizers each preferably fall within the foregoing range.

In the semi-aromatic polyamide film of the present invention, lubricant particles are preferably included for the purpose of achieving satisfactory slippage. Examples of the lubricant particles include: inorganic particles of silica, alumina, titanium dioxide, calcium carbonate, kaolin and barium sulfate; and organic fine particles such as acrylic resin particles, melamine resin particles, silicone resin particles and cross-linked polystyrene particles. The average particle size of the lubricant particles can be appropriately selected according to the demanded properties such as frictional properties and optical properties; however, from the viewpoint of the optical properties, the average particle size of the lubricant particles is preferably 0.05 to 5.0 μm.

Various additives may be included, if necessary, in the semi-aromatic polyamide film of the present invention, within a range not impairing the advantageous effects of the present invention. Examples of the additives include: pigments, colorants such as dyes, coloration inhibitors, antioxidants, weatherability improvers, flame retardants, plasticizers, mold release agents, reinforcing agents, modifiers, antistatic agents, ultraviolet absorbers, anticlouding agents and various polymer resins.

Examples of the pigment include titanium oxide. Examples of the weatherability improver include benzotriazole compounds. Examples of the flame retardant include bromine-based flame retardants and phosphorus-based flame retardants. Examples of the reinforcing agent include talc.

For the purpose of including such additives as described above in the semi-aromatic polyamide film of the present invention, such additives may be added at any stages in the production of the semi-aromatic polyamide film of the present invention.

The haze of the semi-aromatic polyamide film of the present invention is preferably 10% or less, more preferably 5% or less and furthermore preferably 2% or less. For the purpose of making the haze fall within the foregoing range, for example, the techniques such as the regulation of the particle size or the content of the additive or the regulation of the heat treatment conditions are adopted.

The thickness unevenness of the semi-aromatic polyamide film of the present invention is preferably 10% or less, more preferably 8% or less and furthermore preferably 6% or less. By setting the thickness unevenness so as to fall within the foregoing range, the slacks and wrinkles in the film at the time of processing thereof can be reduced. For the purpose of making the thickness unevenness fall within the foregoing range, the techniques such as the regulation of the shape of the unstretched film or the regulation of the stretching conditions are adopted. The definition and the measurement method of the thickness unevenness are described in detail in Examples.

The smaller the thermal contraction rate of the semi-aromatic polyamide film of the present invention, the more preferable. For example, the thermal contraction rate due to the heating with hot air at 200°C for 15 minutes is preferably 3.0% or less, more preferably 1.0% or less and furthermore preferably 0.5% or less. For the purpose of making the thermal contraction rate fall within the foregoing range, for example, the techniques such as the regulation of the conditions of the heat treatment or the relaxation treatment are adopted.

The tensile strength of the semi-aromatic polyamide film of the present invention is preferably 150 MPa or more both in the lengthwise direction (MD) and in the widthwise direction (TD), and the tensile elongation rate of the semi-aromatic polyamide film of the present invention is preferably 60% or more both in TD and in MD. For the purpose of making each of the tensile strength and the tensile elongation rate fall within the foregoing range, the techniques such as the regulation of the conditions of the stretching magnification factor are adopted.

To the semi-aromatic polyamide film of the present invention, a treatment for improving the adhesiveness of the surface of the semi-aromatic polyamide film can be applied, if necessary. Examples of the method for improving the adhesiveness include corona treatment, plasma treatment, acid treatment and flame treatment.

To the surface of the semi-aromatic polyamide film of the present invention, various coating materials may be applied for the purpose of imparting to the surface the functions such as easy-adhesion property, antistatic property, mold release property and gas barrier property.

Examples of the coating material include: coating materials for gas barrier such as a polyvinyl alcohol aqueous solution and polyvinylidene chloride; easy-adhesion coating materials typified by the dispersions such as urethane-based dispersions, ester-based dispersions and olefin-based dispersions; antistatic coating materials such as surfactant-based, conductive polymer-based, carbon-based and metal oxide-based antistatic coating materials; ultraviolet absorbing coating materials such as hindered amine ultraviolet absorbing coating materials and zinc oxide-based ultraviolet absorbing coating materials; hard coating materials such as acrylic hard coating materials and silane coupling agent-based hard coating materials; and mold release coating materials such as silicone-based and olefin-based mold release coating materials.

When a coating material is applied to the semi-aromatic polyamide film of the present invention, the coating material may be applied to the film after stretching or to the film before stretching. Alternatively, the coating material may be applied to the film immediately before the film enters the stretching machine and a coating film may be formed by drying the applied coating material in the preheating section of the stretching machine.

On the surface of the semi-aromatic polyamide film of the present invention, an inorganic substance such as a metal or the oxide of the metal, another type of polymer, paper, woven fabric, non-woven fabric or wooden material may also be laminated.

Examples of the inorganic substance include aluminum, alumina and silica.

Examples of the another type of polymer include: polyolefin resins such as high density polyethylene, medium density polyethylene, low density polyethylene, linear low density polyethylene, ultra high molecular weight polyethylene, polypropylene, ethylene-propylene copolymer (EPR), ethylene-butene copolymer (EBR), ethylene-vinyl acetate copolymer (EVA), saponified product of ethylene-vinyl acetate copolymer (EVOH), ethylene-acrylic acid copolymer (EAA), ethylene-methacrylic acid copolymer (EMAA), ethylene-methyl acrylate copolymer (EMA), ethylene-methyl methacrylate copolymer (EMMA), ethylene-ethyl acrylate copolymer (EEA); the foregoing polyolefin resins in which a carboxyl group or metal salt thereof, an acid anhydride group and a functional group such as an epoxy group are introduced, by a carboxyl group-containing unsaturated compound and a metal salt (the metal being Na, Zn, K, Ca or Mg) thereof wherein the carboxyl group is derived from acrylic acid, methacrylic acid, maleic acid, fumaric acid, itaconic acid, crotonic acid, mesaconic acid, citraconic acid, glutaconic acid, or cis-4-cyclohexene-1,2-dicarboxylic acid and endobicyclo-[2.2.1]-5-heptene-2,3-dicarboxylic acid, by an acid anhydride group-containing unsaturated compound wherein the acid anhydride group is derived from maleic acid anhydride, itaconic acid anhydride, citraconic acid anhydride or endobicyclo-[2.2.1]-5-heptene-2,3-dicarboxylic acid anhydride, and by an epoxy group-containing unsaturated compound wherein the epoxy group is derived from glycidyl acrylate, glycidyl methacrylate, glycidyl ethacrylate, glycidyl itaconate or glycidyl citraconate; polyester resins such as polybutylene terephthalate, polyethylene terephthalate, polyethylene isophthalate, PET/PEI copolymer, polyarylate, polybutylene naphthalate, polyethylene naphthalate and liquid crystal polyester; polyether resins such as polyacetal and polyphenylene oxide; polysulfone resins such as polysulfone and polyether sulfone; polythioether resins such as polyphenylene sulfide and polythioether sulfone; polyketone resins such as polyether ether ketone and polyaryl ether ketone; polynitrile resins such as polyacrylonitrile, polymethacrylonitrile, acrylonitrile-styrene copolymer, methacrylonitrile/styrene copolymer, acrylonitrile/butadiene/styrene copolymer (ABS) and methacrylonitrile/styrene/butadiene copolymer (MBS); polymethacrylate resins such as polymethyl methacrylate and polyethyl methacrylate; polyvinyl ester resins such as polyvinyl acetate; polyvinyl chloride resins such as polyvinylidene chloride, polyvinyl chloride, vinyl chloride/vinylidene chloride copolymer and vinylidene chloride/methyl acrylate copolymer; cellulose resins such as cellulose acetate and cellulose butyrate; polycarbonate resins such as polycarbonate; polyimide resins such as thermoplastic polyimide, polyamide-imide and polyether imide; fluorine-based resins such as polyvinylidene fluoride, polyvinyl fluoride, ethylene/tetrafluoroethylene copolymer (ETFE), polychlorotrifluoroethylene (PCTFE), ethylene/chlorotrifluoroethylene copolymer (ECTFE), terafluoroethylene/hexafluoropropylene copolymer (TFE/HFP, FEP), tetrafluoroethylene/hexafluoropropylene/vinylidene fluoride copolymer (TFE/HFP/VDF, THV) and tetrafluoroethylene/fluoro(alkyl vinyl ether) copolymer (PFA); thermoplastic polyurethane resins; polyurethane elastomer, polyester elastomer and polyamide elastomer; and melamine.

Next, the process for the production of the semi-aromatic polyamide film of the present invention is described.

The process for the production of the semi-aromatic polyamide film of the present invention is a method in which the semi-aromatic polyamide resin is melted to yield a molten polymer, and the molten polymer is made to pass through a metal sintered filter having an absolute filtration diameter of 60 μm or less and then formed into a film shape.

More specifically, the production process is as follows. The semi-aromatic polyamide resin and, if necessary, a heat stabilizer and various additives are melt kneaded with an extruder to yield a molten polymer. Then, the molten polymer is filtered with a filter, and the filtered molten polymer is extruded into a film shape with a flat die such as a T-die. Subsequently, the film-shaped melt is brought into contact with the cooling surface of a travelling cooling member such as a cooling roll or a steel belt to be cooled, and thus a semi-aromatic polyamide film can be obtained. The resulting semi-aromatic polyamide film is substantially an unoriented unstretched film.

As the starting material of the semi-aromatic polyamide resin, a material prepared by mixing a mixture of irregular films produced in the production of film or a scrap mixture created as selvage trimmings with a virgin starting material (a semi-aromatic polyamide resin that contains no impurities) is used in some cases. In such a case, a starting material can be prepared, for example, by dry blending or melt kneading these mixtures with the virgin starting material.

As the filter to be used for filtration of the molten polymer, a metal sintered filter having an absolute filtration diameter of 60 μm or less is preferably used. Above all, a metal fiber sintered filter or a metal powder sintered filter is preferably used from the viewpoint of more efficiently removing the fine agglomerated matter to be fish-eye defects, owing to the random orientational arrangement of the metal fibers or the metal powder particles constituting the filter. The metal fiber sintered filter is furthermore preferable from the viewpoint of easy suppression of the filtration pressure rise at the time of filtration. When a netlike metal sintered filter is used in stead of a metal fiber sintered filter or a metal powder sintered filter, the fine agglomerated matter cannot be sufficiently removed in some cases. As a result, in the obtained film, the occurrence of fish-eyes cannot be sufficiently reduced in some cases.

The filtration diameter of a metal sintered filter is represented by an absolute filtration diameter and a nominal filtration diameter. The absolute filtration diameter is defined by the maximum size of the glass bead particles passing through the filter media (filtration material), measured according to the method of JIS-B8356. On the other hand, the nominal filtration diameter is defined by the contaminant particle size (foreign matter particle size) at which the capture efficiency with the filter media, measured according to the method of JIS-B8356, is 95%.

The metal fiber sintered filter may be of a single-layer type, or may be of a structure in which two or more layers different in filtration diameter are laminated.

The absolute filtration diameter of the metal sintered filter is preferably 60 μm or less, more preferably 50 μm or less, furthermore preferably 30 μm or less and particularly preferably 20 μm or less. The smaller the absolute filtration diameter, the higher the effect to remove the foreign matter causing fish-eyes. Herewith, the fish-eyes are reduced and a film excellent in exterior appearance can be produced. When the absolute filtration diameter exceeds 60 μm, the fish-eyes cannot be sufficiently suppressed.

When a molten polymer is filtered with the sintered filter in the present invention, the use of a semi-aromatic polyamide polymerized by using a specific catalyst or a semi-aromatic polyamide polymerized by using a specific heat stabilizer enables the effective removal of the foreign matter and the prevention of the filtration pressure rise to be simultaneously performed. More specifically, when a semi-aromatic polyamide polymerized by using a phosphorous acid catalyst is filtered with a metal sintered filter, the filtration pressure rise occurring with the increase of the filtration amount can be more suppressed and thus the filter life can be more improved than when a polymer polymerized by using another catalyst, for example, a hypophosphorous acid catalyst is filtered.

The extrusion temperature of the molten polymer is preferably equal to or higher than the melting point of the semi-aromatic polyamide resin and 350°C or lower. When the extrusion temperature exceeds 350°C, the decomposition or the thermal degradation of the semi-aromatic polyamide resin is promoted in some cases.

The temperature of the travelling cooling member used in the film formation is preferably set at 40 to 90°C, more preferably at 45 to 70 °C and furthermore preferably at 45 to 60°C. When the set temperature of the travelling cooling member exceeds 90°C to be too high, the release of the obtained film from the travelling cooling member becomes difficult in some cases. In the case where the temperature of the travelling cooling member is lower than 40°C to be too low, when the film-shaped melt is brought into contact with the travelling cooling member, cooling unevenness tends to occur and the smoothness of the obtained film is impaired in some cases.

In the production process of the present invention, for the purpose of obtaining a film uniform in thickness, it is preferable to adopt a method in which the molten polymer is made to uniformly adhere to the travelling cooling member to be solidified by cooling. Examples of such a method include an air knife casting method, an electrostatic casting method and a vacuum chamber method.

Preferably, in the production process of the present invention, the surface of each of the melting section of the cylinder or the barrel, the metering section, the single pipe, the filter, the T-die and others is subjected to a treatment to reduce the surface roughness for the purpose of preventing the retention of the resin. Examples of the method for reducing the roughness of the surface include a method of modifying the surface with a low polarity substance and a method in which silicon nitride or diamond-like carbon is vapor deposited on the surface.

In the production process of the present invention, preferably an unstretched film of the semi-aromatic polyamide resin is preheated and stretched. The thickness of the obtained stretched film is preferably 0.5 μm to 1.5 mm. By preparing the stretched film, the low water absorbability, the chemical resistance, the heat resistance and the mechanical properties of the film can be improved, and thus the film can be preferably used.

Examples of the method for stretching the film include a flat successive biaxial stretching method, a flat simultaneous biaxial stretching method and a tubular method. Above all, it is preferable to adopt the flat simultaneous biaxial stretching method, from the viewpoint of being capable of making satisfactory the film thickness precision and making uniform the physical properties in the widthwise direction of the film.

As the stretching apparatus for adopting the flat simultaneous biaxial stretching method, for example, a screw-type tenter, a pantagraph-type tenter and a linear-motor-driven clip-type tenter can be used.

From the viewpoint of making satisfactory the heat resistance and the mechanical strength of the semi-aromatic polyamide film, the stretching magnification factor of the film in each of the MD and TD preferably falls within a range from 1.5 to 10 and more preferably within a range from 2 to 5.

As the film stretching rate, in each of MD and TD, the stretching strain rate preferably exceeds 400%/min, and is more preferably 800%/min or more and 12000%/min or less and furthermore preferably 1200% or more and 6000% or less. By setting the stretching strain rate to fall within the foregoing range, an unstretched film can be stretched without breaking the film.

When preheating is performed before stretching, the preheating temperature is preferably (Tg - 20°C) to (Tg + 40°C) and more preferably (Tg - 15°C) to (Tg + 35°C). By setting the preheating temperature to fall within the foregoing range, stretching can be stably performed without developing stretching unevenness or film breakage. When the preheating temperature is lower than (Tg - 20°C), the film cannot be deformed to be broken at the time of stretching in some cases; on the other hand, when the preheating temperature exceeds (Tg + 40°C), the film is crystallized before stretching, and the film is broken or stretching unevenness occurs at the time of stretching in some cases. Here, Tg represents the glass transition temperature.

The preheating time of the film before stretching is not particularly limited, and a range of the preheating time from 1 to 60 seconds is a practical range.

The stretching temperature of the film is preferably Tg or higher, and preferably exceeds Tg and is (Tg + 50°C) or lower. By setting the stretching temperature to fall within the foregoing range, the film can be stably stretched without causing stretching unevenness or film breakage. When the stretching temperature is lower than Tg, the film is broken in some cases. On the other hand, when the stretching temperature exceeds (Tg + 50°C), stretching unevenness is developed in some cases.

After stretching is performed, preferably a thermal fixation treatment is performed while the film is being gripped with the clips for stretching. By performing the thermal fixation treatment, the dimensional stability at high temperatures of the obtained film can be improved.

The thermal fixation treatment temperature is preferably 200°C to (Tm - 5°C) and more preferably 240°C to (Tm - 10°C) from the viewpoint of the heat resistance and the dimensional stability of the film.

Further, after performing the thermal fixation treatment, a relaxation treatment of preferably 1 to 10% and more preferably 3 to 7% is performed while the film is being gripped with the clips. By performing the relaxation treatment, the dimensional stability at high temperatures of the obtained film can be further improved.

The obtained semi-aromatic polyamide film may be processed into a form of sheet, or may be wound up by a wind-up roll into a form of a roll. From the viewpoint of the productivity when used in various applications, the film is preferably made to have a form of a film roll. When the film is in a form of a film roll, the film may be slit into intended widths.

The semi-aromatic polyamide film of the present invention obtained as described above is excellent in mechanical properties, flexibility, adhesiveness, heat resistance, humidity-heat resistance, chemical resistance and low water absorbability, due to the properties intrinsically possessed by nylon 9T, as compared to the conventional polyamide films in which polyamide resins other than nylon 9T are used. Further, the occurrence of the fish-eyes in the film is reduced. Accordingly, the semi-aromatic polyamide film of the present invention obtained as described above can be suitably used in the following fields. Specifically, the semi-aromatic polyamide film of the present invention obtained as described above can be suitably used, for example, as films for household use and films for industrial materials such as: packaging materials for medical supplies; food packaging materials of retort food; packaging materials for electronic components such as materials for packaging semiconductors; electric insulating materials for motors, transformers and cables; dielectric materials for use in capacitors; materials for magnetic tapes such as cassette tapes, magnetic tapes for data storage for digital data storage, and video tapes; solar cell boards; liquid crystal plates; conductive films; protective plates for display devices; LED mounting boards; flexible printed wiring boards; electronic board materials such as flexible flat cables; coverlay films for flexible printed wiring boards; heat-resistant adhesive tapes such as heat-resistant masking tapes and industrial process tapes; and heat-resistant bar code labels, heat-resistant reflectors, various mold release films, heat-resistant adhesive base films, photographic films, molding materials, agricultural materials, medical materials, civil engineering and building materials, and filtration membranes. Examples

Next, the present invention is described more specifically by way of Examples. However, the present invention is not limited by these Examples.

The measurements of the physical properties of the semi-aromatic polyamide resin and the semi-aromatic polyamide film were performed by the following methods. When (5) to (10) were measured, the measurements were performed in an environment of a temperature of 20°C and a relative humidity of 65%.

(1) Limiting Viscosity of Semi-Aromatic Polyamide Resin

In concentrated sulfuric acid having a concentration of 96% by mass, the semi-aromatic polyamide resin was dissolved at 30°C so as for the concentration to be 0.05 g/dl, 0.1 g/dl, 0.2 g/dl and 0.4 g/dl, and thus the reduced viscosity of the semi-aromatic polyamide resin was determined for each of these concentrations. Then, by using these reduced viscosities, the value obtained by extrapolating to the concentration of 0 g/dl was taken as the limiting viscosity.

(2) Melting Point (Tm) and Glass Transition Temperature (Tg) of Semi-Aromatic Polyamide Resin

By using a differential scanning calorimeter (DSC-7, manufactured by Perkin-Elmer Corp.), 10 mg of the semi-aromatic polyamide resin was increased in temperature (1st scan) in a nitrogen environment from 20°C to 350°C at a rate of 10°/min, and was maintained at 350°C for 5 minutes. Then, the semi-aromatic polyamide resin was decreased in temperature down to 20°C at a rate of 100°C/min, maintained at 20°C for 5 minutes, and then further increased in temperature to 350°C at a rate of 20°C/min (2nd scan). The peak top temperature of the crystal fusion peak observed in the 2nd scan was taken as the melting point, and the temperature corresponding to the midpoint between the two bending points due to the glass transition was taken as the glass transition temperature.

(3) Thermal Decomposition Temperature

By using a thermogravity analyzer (TGA-7, manufactured by Perkin-Elmer Corp.), 10 mg of the semi-aromatic polyamide resin was increased in temperature in a nitrogen environment 30°C to 500°C at a rate of 20°C/min. The temperature at which the mass was reduced by 5% by mass in relation to the mass before the temperature increase was taken as the thermal decomposition temperature.

(4) Pressure Rise Time of Filter

The semi-aromatic polyamide resin was placed and melted in a single screw extruder with the cylinder heated to a cylinder temperature of 320°C, filtered with a plane filter having a breaker plate on the back side thereof, and then extruded from the T-die heated to 320°C. During the extrusion, the extrusion output was set so as for the flow rate per unit area of the filter to be 1 kg/cm$^2$/hr. The pressure upstream of the filter was recorded as a function of time. The time elapsed from the start of the extrusion until the change of the pressure upstream of the tilter reached 10 MPa was measured.

(5) Film Thickness

The thickness of the film was measured with a thickness meter (MT12B, manufactured by HEIDENHAIN Corp.).

(6) Number of Fish-Eyes in Film

The number of the fish-eyes in the film was measured by using as a measurement apparatus an off-line fish-eye counter (manufactured by Frontier System Inc.). More specifically, 10 film samples of 20 cm x 20 cm in size were cut out from randomly selected 10 positions in a roll-shaped film (thickness: 25μm); the number of fish-eyes of 0.01 mm$^2$ or more in size in each of the samples was measured, and the average value of the resulting 10 values was derived; then, the resulting average value was converted into a value per 1000 cm$^2$. The detection sensitivity of the measurement apparatus was regulated to meet the conditions enabling the counting of the number of gels or fish-eyes of 0.01 mm$^2$ or more in size, according to the "Dirt Measurement Chart" produced by Japanese National Printing Bureau.

(7) Thickness Unevenness of Film

The thickness of the center in the full width direction of a film and the thickness of each of the end positions in the full width direction of the film were measured. The measurement positions were 10 positions placed every 1 meter in the lengthwise direction; thus, the measurement values were obtained for the 30 measurement positions in total (10

positions in each of the center and both end positions). The maximum and minimum values of the measurement value were represented by Lmax and Lmin, respectively, and the average value of Lmax and Lmin was represented by La. The value represented by the following formula was defined as the thickness unevenness R.

$$R = [(Lmax - Lmin)/2La] \times 100$$

In this case, both end positions mean the positions inwardly separated by 10% of the full width from both ends in the widthwise direction of the film.

(8) Haze of Film

The haze of a film was measured by using a turbidity meter (NDH2000, manufactured by Nippon Denshoku Industries Co., Ltd.) according to JIS K7136.

(9) Thermal Shrinkage Percentage of Film

The thermal shrinkage percentage of the film when heat treated at 200°C for 15 minutes was measured in each of MD and TD, according to JIS K7133.

(10) Tensile Strength and Tensile Elongation Rate of Film

The tensile strength and the tensile elongation rate of a sample were measured in each of MD and TD, according to JIS K7127, before and after the sample was allowed to stand still in a hot air dryer set at 250°C for 5 minutes. The size of the sample was 10 mm x 150 mm, the initial separation between chucks was 100 mm and the tensile rate was 500 mm/min. It is to be noted that in Example 3, the temperature of the hot air dryer was set at 230°C.

The starting materials used in the production of the semi-aromatic polyamide resin were listed below.

<Starting Material Monomers>

(1) NMDA
1,9-Nonanediamine
(2) MODA
2-Methyl-1,8-octanediamine
(3) TPA
Terephthalic acid

<Catalysts>

(1) PA
Phosphorous acid
(2) SHP
Sodium hypophosphate

<Semi-Aromatic Polyamide Resin>

(1) Semi-aromatic polyamide resin A

In a reactor, 1343 g of NMDA, 237 g of MODA, 1627 g of TPA (average particle size: 80 μm) (NMDA:MODA:TPA = 85:15:99 in molar ratio), 48.2 g of benzoic acid (BA) (4.0 mol% in relation to the total number of moles of the dicarboxylic acid component and the diamine component), 3.2 g of PA (0.1% by mass in relation to the total amount of the dicarboxylic acid component and the diamine component) and 1100 g of water were placed and the air in the reactor was replaced with nitrogen gas. The resulting mixture was stirred at 80°C for 0.5 hour at 28 rotations per minute, and then increased

in temperature to 230°C. Then, the mixture was heated at 230°C for 3 hours. Then, the mixture was cooled, and the reactants were taken out. The reactants were pulverized, and then heated in a dryer in a flow of nitrogen gas at 220°C for 5 hours to be subjected to solid phase polymerization, and thus a polymer was obtained. The obtained polymer was melt kneaded under the condition of a cylinder temperature of 320°C and extruded in a strand shape. Subsequently, the strand was cooled and cut to prepare the pellet-shaped semi-aromatic polyamide resin A.

(2) to (5)

Semi-Aromatic Polyamide Resins B to E

Each of the semi-aromatic polyamide resins B to E was prepared by performing the same operations as performed for the semi-aromatic polyamide A except that the composition of the starting material monomers, and the type and the mixing amount of the polymerization catalyst were altered as shown in Table 1.

Table 1 shows the compositions and the values of the properties of the semi-aromatic polyamide resins A to E.

[Table 1]

| | | | | Semi-aromatic polyamide | | | | |
|---|---|---|---|---|---|---|---|---|
| | | | | A | B | C | D | E |
| Composition | Starting material monomers (molar ratio) | Diamine component | NMDA | 85 | 80 | 50 | 85 | 80 |
| | | | MODA | 15 | 20 | 50 | 15 | 20 |
| | | Dicarboxylic acid component | TPA | 99 | 99 | 99 | 99 | 99 |
| | Polymerization catalyst | Type | | PA | PA | PA | SHP | SHP |
| | | Addition amount | % by mass | 0.15 | 0.15 | 0.2 | 0.1 | 0.1 |
| Properties | Limiting viscosity | | dl/g | 1.19 | 1.17 | 1.25 | 1.19 | 1.17 |
| | Tm | | °C | 306 | 304 | 265 | 306 | 304 |
| | Tg | | °C | 125 | 125 | 123 | 125 | 125 |

<Heat Stabilizer>

A. Hindered phenol stabilizers

(1) GA
3,9-Bis[2-{3-(3-t-butyl-4-hydroxy-5-methylphenyl)propionyloxy}-1,1-dimethylethyl]-2,4,8,10-tetraoxaspiro[5.5]undecane (Sumilizer GA-80, manufactured by Sumitomo Chemical Co., Ltd., thermal decomposition temperature: 392°C)
(2) 1098
N,N'-(hexane-1,6-diyl) bis[3-(3,5-di-tert-butyl-4-hydroxyphenyl)propionamide] (Irganox 1098, manufactured by BASF Japan Ltd., thermal decomposition temperature temperature: 344°C)

B. Phosphorus-based stabilizers

(1) 168
Tris(2,4-di-tert-butylphenyl)phosphite (Irgafos 168, manufactured by BASF Japan Ltd.)
(2) GSY
Tetrakis(2,4-di-tert-butyl-5-methylphenyl)-4,4'-biphenylenediphosphonite (GSY-P101 (registered trademark), manufactured by Sakai Chemical Industry Co., Ltd.)

(3) EPQ
Tetrakis(2,4-di-tert-butylphenyl)-4,4'-biphenylenediphosphonite (Hostanox P-EPQ, manufactured by Clariant K.K.)

C. Bifunctional type heat stabilizer

(1) GS
2-[1-(2-Hydroxy-3,5-di-tert-pentylphenyl)ethyl]-4,6-di-tert-pentylphenyl acrylate (Sumilizer GS, manufactured by Sumitomo Chemical Co., Ltd.)

<Filters>

(1) NF-07: Metal fiber sintered filter (NF-07, manufactured by Nippon Seisen Co., Ltd., nominal filtration diameter: 15 μm, absolute filtration diameter: 15 μm)
(2) NF-10: Metal fiber sintered filter (NF-10, manufactured by Nippon Seisen Co., Ltd., nominal filtration diameter: 30 μm, absolute filtration diameter: 30 μm)
(3) NF-13: Metal fiber sintered filter (NF-13, manufactured by Nippon Seisen Co., Ltd., nominal filtration diameter: 60 μm, absolute filtration diameter: 60 μm)
(4) NPM-50: Metal powder sintered filter (NPM-50, manufactured by Nippon Seisen Co., Ltd., nominal filtration diameter: 50 μm, absolute filtration diameter: 50 μm)
(5) #400: Plain weave wire mesh filter (NM5P-38, manufactured by Nippon Seisen Co., nominal filtration diameter: 38 μm, absolute filtration diameter: 75 μm)
(6) #800: Plain weave wire mesh filter (NM5P-15, manufactured by Nippon Seisen Co., nominal filtration diameter: 15 μm, absolute filtration diameter: 60 μm)

Example 1

In a single screw extruder, with the cylinder temperature set at 320°C, having a screw diameter of 50 mm, 100 parts by mass of the semi-aromatic polyamide resin A and 0.2 part by mass of GA were placed, and melted to yield a molten polymer. The molten polymer was filtered by using a metal fiber sintered filter (NF-10, manufactured by Nippon Seisen Co., Ltd., absolute filtration diameter: 30 μm). Then, the molten polymer was extruded from a T-die set at 320°C to prepare a film-shaped melt. The melt was cooled by allowing the melt to adhere, by the electrostatic casting method, to a cooling roll set at 50°C, and thus a substantially non-oriented unstretched film (thickness: 250 μm) was obtained.
The surface of the cooling roll used was coated with a ceramic ($Al_2O_3$) in a thickness of 0.15 mm. As the electrode for application of electrostatic voltage, a tungsten wire of 0.2 mm in diameter was used. In the application of electrostatic voltage, a direct current high voltage generating device of 300 W (15 kV x 20 mA) was used to apply a voltage of 6.5 kV. The extrusion output of the molten polymer was set so as for the flow rate per unit area of the filter to be 1 $kg/cm^2/hr$. Even when an unstretched film was continuously formed over 6 hours, no pressure rise of the filter occurred, and the semi-aromatic polyamide film was able to be stably produced.
Next, while both ends of the unstretched film were being gripped with clips, the film was introduced into a tenter-type simultaneous biaxial stretching machine (inlet width: 193 mm, outlet width: 605 mm), and thus the film was simultaneously biaxially stretched. The stretching conditions were such that the temperature of the preheating section was 120°C, the temperature of the stretching section was 130°C, the stretching strain rate in the MD was 2400%/min, the stretching strain rate in the TD direction was 2760%/min, the stretching magnification factor in the MD direction was 3.0 and the stretching magnification factor in the TD was 3.3.
In the same tenter, thermal fixation was performed at 270°C, a 5% relaxation treatment was performed in the widthwise direction of the film, and thus a 25-μm thick biaxially stretched film was obtained. The obtained film was excellent in uniformity with the thickness unevenness of 10% or less, transparent with a haze of 1.5%, and satisfactory in exterior appearance. The evaluation results of Example 1 are shown in Table 2.

[Table 2]

| | | | | | Examples | | | | | | | | | | | | | | | | | |
|---|---|---|---|---|---|---|---|---|---|---|---|---|---|---|---|---|---|---|---|---|---|---|
| | | | | | 1 | 2 | 3 | 4 | 5 | 6 | 7 | 8 | 9 | 10 | 11 | 12 | 13 | 14 | 15 | 16 | 17 | 18 |
| Composition (parts by mass) | Semi-aromatic polyamide resins | | A | | 100 | - | - | - | - | 100 | 100 | 100 | 100 | 100 | - | - | - | - | - | - | 100 | - |
| | | | B | | - | 100 | - | - | - | - | - | - | - | - | - | - | - | - | - | - | - | - |
| | | | C | | - | - | 100 | - | - | - | - | - | - | - | - | - | - | - | - | - | - | - |
| | | | D | | - | - | - | 100 | - | - | - | - | - | - | 100 | 100 | 100 | 100 | 100 | 100 | - | 100 |
| | | | E | | - | - | - | - | 100 | - | - | - | - | - | - | - | - | - | - | - | - | - |
| | Heat stabilizers | Hindered phenol | GA | | 0.2 | 0.2 | 0.2 | 0.2 | 0.2 | 0.2 | 0.2 | 0.2 | 0.2 | 0.2 | - | - | 0.2 | - | - | 0.2 | 0.2 | 0.2 |
| | | | 1098 | | - | - | - | - | - | - | - | - | - | - | - | - | - | 0.1 | 0.1 | - | - | - |
| | | Phosphorus-based | 168 | | - | - | - | - | - | - | - | - | - | - | 0.1 | - | - | - | - | - | - | - |
| | | | GSY | | - | - | - | - | - | - | - | - | - | - | - | 0.1 | 0.1 | 0.1 | - | 0.1 | - | 0.1 |
| | | | EPQ | | - | - | - | - | - | - | - | - | - | - | - | - | - | - | 0.1 | - | - | - |
| | | Bifunctional type | GS | | - | - | - | - | - | - | - | - | - | - | - | - | - | - | - | 0.1 | - | 0.1 |
| Production conditions | Filter | Type | | | NF-10 | NF-07 | NF-13 | NF-13 | NF-10 | NPM-50 | NF-10 | NF-10 | NF-10 | NF-10 | NF-10 | NF-10 | NF-10 | NF-10 | NPM-50 | NPM-50 | NF-10 | NPM-50 |
| | | Nominal filtration diameter | µm | | 30 | 15 | 60 | 60 | 30 | 50 | 30 | 30 | 30 | 30 | 30 | 30 | 30 | 30 | 50 | 50 | 30 | 50 |
| | | Absolute filtration diameter | µm | | 30 | 15 | 60 | 60 | 30 | 50 | 30 | 30 | 30 | 30 | 30 | 30 | 30 | 30 | 50 | 50 | 30 | 50 |
| | Filter pressure rise time | | hr | | > 6 | > 6 | > 6 | 2.5 | 1.5 | 1.6 | > 6 | > 6 | > 6 | > 6 | 3 | > 6 | > 6 | > 6 | > 6 | > 6 | > 6 | > 6 |
| Evaluation of film | Thickness | | µm | | 25.0 | 25.1 | 25.0 | 25.1 | 25.0 | 25.1 | 15.0 | 38.1 | 50.0 | 75.0 | 25.0 | 25.0 | 25.1 | 25.1 | 24.9 | 25.0 | 250 | 250 |
| | Number of fish-eyes | | 1/1000 $cm^2$ | | 15 | 9 | 45 | 51 | 21 | 12 | 7 | 21 | 28 | 36 | 17 | 15 | 13 | 13 | 8 | 5 | 12 | 4 |
| | Thermal shrinkage percentage | | MD | % | 0.5 | 0.4 | 2.3 | 0.6 | 0.4 | 0.4 | 0.7 | 0.4 | 0. 4 | 0.3 | 0.4 | 0.5 | 0.4 | 0.4 | 0.4 | 0.3 | - | - |
| | | | TD | % | 0.2 | 0.1 | 1.9 | 0.1 | 0.3 | 0.1 | 0.3 | 0.2 | 0.2 | 0.1 | 0.3 | 0.2 | 0.1 | 0.1 | 0.2 | 0.1 | - | - |
| | Tensile strengths | Before heat treatment | MD | MPa | 200 | 195 | 210 | 201 | 197 | 197 | 203 | 190 | 209 | 196 | 164 | 157 | 205 | 191 | 199 | 201 | - | - |
| | | | TD | MPa | 226 | 225 | 220 | 236 | 231 | 228 | 231 | 222 | 225 | 227 | 171 | 167 | 238 | 237 | 230 | 233 | - | - |
| | | After heat treatment | MD | MPa | 179 | 175 | 185 | 182 | 184 | 180 | 183 | 174 | 181 | 179 | 18 | 15 | 186 | 134 | 124 | 194 | - | - |
| | | | TD | MPa | 201 | 198 | 197 | 208 | 210 | 203 | 207 | 199 | 202 | 202 | 33 | 32 | 216 | 187 | 157 | 225 | - | - |
| | | Retention rate | MD | % | 90 | 90 | 88 | 91 | 93 | 91 | 90 | 92 | 87 | 91 | 11 | 10 | 91 | 70 | 62 | 97 | - | - |
| | | | TD | % | 89 | 88 | 90 | 88 | 91 | 89 | 90 | 90 | 90 | 89 | 19 | 19 | 91 | 79 | 68 | 97 | - | - |
| | Tensile elongation rates | Before heat treatment | MD | % | 93 | 98 | 92 | 106 | 97 | 92 | 100 | 97 | 105 | 101 | 72 | 68 | 90 | 91 | 92 | 98 | - | - |
| | | | TD | % | 68 | 64 | 66 | 74 | 67 | 65 | 72 | 67 | 73 | 70 | 40 | 38 | 72 | 70 | 68 | 75 | - | - |
| | | After heat treatment | MD | % | 92 | 90 | 90 | 95 | 92 | 94 | 96 | 94 | 95 | 92 | 2 | 1 | 89 | 50 | 47 | 94 | - | - |
| | | | TD | % | 69 | 63 | 63 | 72 | 68 | 66 | 71 | 65 | 71 | 68 | 2 | 2 | 66 | 46 | 42 | 70 | - | - |
| | | Retention rate | MD | % | 99 | 92 | 98 | 89 | 95 | 102 | 96 | 97 | 90 | 91 | 3 | 1 | 99 | 55 | 51 | 96 | - | - |
| | | | TD | % | 101 | 99 | 95 | 97 | 101 | 102 | 98 | 97 | 97 | 97 | 5 | 5 | 92 | 66 | 62 | 93 | - | - |

*In Table 2, in each of Examples 17 and 18, an unstretched film was evaluated.

Examples 2 and 4 to 16 and Comparative Examples 1 to 4

In each of Examples 2 and 4 to 16 and Comparative Examples 1 to 4, a semi-aromatic polyamide film was produced in the same manner as in Example 1 except that the type and the content proportion of the semi-aromatic polyamide resin, the type and the content proportion of the heat stabilizer and the type of the filter used were altered as shown in Table 2 or Table 3.

[Table 3]

<table>
<tr><td colspan="5" rowspan="2"></td><td colspan="4">Comparative Examples</td></tr>
<tr><td>1</td><td>2</td><td>3</td><td>4</td></tr>
<tr><td rowspan="3">Composition (parts by mass)</td><td colspan="2" rowspan="2">Semi-aromatic polyamide resins</td><td colspan="2">A</td><td>100</td><td>-</td><td>100</td><td>100</td></tr>
<tr><td colspan="2">D</td><td>-</td><td>100</td><td>-</td><td>-</td></tr>
<tr><td colspan="2">Hindered phenol Heat stabilizers</td><td colspan="2">GA</td><td>0.2</td><td>0.2</td><td>0.2</td><td>0.2</td></tr>
<tr><td rowspan="4">Production conditions</td><td rowspan="3">Filter</td><td colspan="3">Type</td><td>NF-14</td><td>NF-15</td><td># 400</td><td># 800</td></tr>
<tr><td>Nominal filtration diameter</td><td colspan="2">μm</td><td>80</td><td>100</td><td>38</td><td>15</td></tr>
<tr><td>Absolute filtration diameter</td><td colspan="2">μm</td><td>80</td><td>100</td><td>75</td><td>60</td></tr>
<tr><td colspan="2">Filter pressure rise time</td><td colspan="2">hr</td><td>>6</td><td>3.6</td><td>>6</td><td>2.1</td></tr>
<tr><td rowspan="16">Evaluation of film</td><td colspan="2">Thickness</td><td colspan="2">μm</td><td>25.0</td><td>25.0</td><td>25.1</td><td>25.0</td></tr>
<tr><td colspan="2">Number of fish-eyes</td><td colspan="2">1/1000 cm$^2$</td><td>105</td><td>120</td><td>174</td><td>126</td></tr>
<tr><td colspan="2" rowspan="2">Thermal shrinkage percentage</td><td>MD</td><td>%</td><td>0.5</td><td>0.6</td><td>0.4</td><td>0.5</td></tr>
<tr><td>TD</td><td>%</td><td>0.2</td><td>0.1</td><td>0.1</td><td>0.2</td></tr>
<tr><td rowspan="6">Tensile strengths</td><td rowspan="2">Before heat treatment</td><td>MD</td><td>MPa</td><td>193</td><td>187</td><td>191</td><td>180</td></tr>
<tr><td>TD</td><td>MPa</td><td>228</td><td>226</td><td>226</td><td>232</td></tr>
<tr><td rowspan="2">After heat treatment</td><td>MD</td><td>MPa</td><td>175</td><td>176</td><td>181</td><td>172</td></tr>
<tr><td>TD</td><td>MPa</td><td>203</td><td>204</td><td>202</td><td>208</td></tr>
<tr><td rowspan="2">Retention rate</td><td>MD</td><td>%</td><td>91</td><td>94</td><td>95</td><td>96</td></tr>
<tr><td>TD</td><td>%</td><td>89</td><td>90</td><td>89</td><td>90</td></tr>
<tr><td rowspan="6">Tensile elongation rates</td><td rowspan="2">Before heat treatment</td><td>MD</td><td>%</td><td>100</td><td>92</td><td>93</td><td>103</td></tr>
<tr><td>TD</td><td>%</td><td>68</td><td>70</td><td>68</td><td>78</td></tr>
<tr><td rowspan="2">After heat treatment</td><td>MD</td><td>%</td><td>95</td><td>90</td><td>93</td><td>97</td></tr>
<tr><td>TD</td><td>%</td><td>68</td><td>68</td><td>65</td><td>72</td></tr>
<tr><td rowspan="2">Retention rate</td><td>MD</td><td>%</td><td>95</td><td>98</td><td>100</td><td>95</td></tr>
<tr><td>TD</td><td>%</td><td>100</td><td>97</td><td>96</td><td>92</td></tr>
</table>

Example 3

A semi-aromatic polyamide film was produced in the same manner as in Example 1 except that the type and the content proportion of the semi-aromatic polyamide resin, the type and the content proportion of the heat stabilizer and the type of the filter used were altered as shown in Table 2, and the thermal fixation temperature in the tenter was set at 230°C.

Examples 17 and 18

The unstretched films obtained in the course of the production of semi-aromatic polyamide films in Examples 1 and 16 were evaluated with respect to the physical properties, and the evaluation results of the unstretched films of Examples 1 and 16 were adopted as the evaluation results in Examples 17 and 18, respectively. In the films obtained in Examples 17 and 18, the evaluations of the items other than the thickness and the number of fish-eyes were not performed.

The composition, the production conditions and the film evaluation of the semi-aromatic polyamide film in each of Examples 1 to 18 and Comparative Examples 1 to 4 are shown in Table 2 or Table 3.

The semi-aromatic polyamide films obtained in Examples 1 to 16 were each formed by filtering the molten polymer with a metal fiber sintered filter or a metal powder sintered filter having an absolute filtration diameter of 60 μm or less. Accordingly, the number of fish-eyes of each of these semi-aromatic polyamide films was as small as 100/1000 $cm^2$ or less and each of these semi-aromatic polyamide films was excellent in exterior appearance. Each of these semi-aromatic polyamide films was also excellent in various properties. Also, in each of Examples 17 and 18, where unstretched films were obtained, the number of fish-eyes was sufficiently small.

In each of Examples 4, 5 and 11, the semi-aromatic polyamide resin produced by using sodium hypophosphite as the polymerization catalyst instead of phosphorous acid was used, and hence the rise of the filtration pressure occurred in a slightly early stage.

In Example 6, a metal powder sintered filter was used as a filter, and hence the rise of the filtration pressure occurred in a slightly early stage.

In each of Examples 12 to 16, the semi-aromatic polyamide resin produced by using sodium hypophosphite as the polymerization catalyst instead of phosphorous acid was used, but the phosphorus-based heat stabilizer represented by the general formula (I) was used as the heat stabilizer, and hence the rise of the filtration pressure was suppressed. Additionally, in each of Examples 12 to 16, the mechanical properties of the film were satisfactory and the decrease of the tensile strength due to the heat treatment was small. In particular, in each of Examples 13 and 16, the phosphorus-based heat stabilizer, which is a compound represented by the general formula (I), $R^1$ to $R^4$ being all 2,4-di-tert-butyl-5-methylphenyl groups, was used in combination with Sumilizer GA-80 which is hindered phenol heat stabilizer having a thermal decomposition temperature of 320°C or higher, and hence the decrease of the tensile strength due to the heat treatment was smaller. In Example 16, a bifunctional type heat stabilizer was further used in combination, and hence, as compared to Example 13, the decrease of the tensile strength was further smaller.

In each of Comparative Examples 1 and 2, a metal fiber sintered filter having an absolute filtration diameter larger than 60 μm was used; and hence, the number of fish-eyes in the obtained film was as large as 100/1000 $cm^2$ or more.

In each of Comparative Examples 3 and 4, a wire mesh filter was used instead of a metal fiber sintered filter or a metal powder sintered filter; and hence, the number of fish-eyes in the obtained film was as large as 100/1000 $cm^2$ or more.

Industrial Applicability

The semi-aromatic polyamide film of the present invention is of high quality with reduced fish-eyes to be the exterior appearance defects. Accordingly, the semi-aromatic polyamide film of the present invention can be suitably used in the applications to, for example, industrial materials, engineering materials and household articles, and is extremely effective.

## Claims

1. A semi-aromatic polyamide film comprising a semi-aromatic polyamide resin comprising a dicarboxylic acid mainly composed of terephthalic acid and a diamine mainly composed of an aliphatic diamine having 9 carbon atoms, wherein the film further comprises a phosphorous acid polymerization catalyst and a hindered phenol heat stabilizer, and a number density of fish-eyes of 0.01 $mm^2$ or more in size present in the film is 100/1000 $cm^2$ or less.

2. The semi-aromatic polyamide film according to claim 1, further comprising a phosphorus-based heat stabilizer.

3. The semi-aromatic polyamide film according to claim 2, wherein the phosphorus-based heat stabilizer is a compound represented by the following general formula (1) :

[Formula 1]

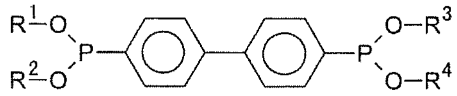

(I)

(in the formula, $R^1$ to $R^4$ each independently represent a hydrogen atom, a 2,4-di-tert-butyl-5-methylphenyl group or a 2,4-di-tert-butylphenyl group.)

4. The semi-aromatic polyamide film according to claim 3, wherein $R^1$ to $R^4$ of the compound represented by the foregoing general formula (1) are all a 2,4-di-tert-butyl-5-methylphenyl group.

5. The semi-aromatic polyamide film according to any one of claims 1 to 4, wherein the hindered phenol heat stabilizer has a thermal decomposition temperature at 5% weight loss of 320°C or higher as measured with a thermogravity analyzer.

6. The semi-aromatic polyamide film according to any one of claims 1 to 5, wherein the hindered phenol heat stabilizer has an amide group.

7. The semi-aromatic polyamide film according to any one of claims 1 to 6, further comprising a bifunctional type heat stabilizer.

8. A process for the production of the semi-aromatic polyamide film according to any one of claims 1 to 7, wherein a molten polymer is obtained by melting the semi-aromatic polyamide resin, the molten polymer is made to pass through a metal sintered filter having an absolute filtration diameter of 60 μm or less, and then the molten resin is formed into a film shape.

9. The process for the production of the semi-aromatic polyamide film, according to claim 8, wherein a metal fiber sintered filter or a metal powder sintered filter is used as the metal sintered filter.

**Patentansprüche**

1. Halbaromatischer Polyamidfilm, der ein Halbaromatisches Polyamidharz umfasst, das eine Dikarbonsäure enthält, die hauptsächlich aus Terephthalsäure und einem Diamin besteht, das hauptsächlich aus einem aliphatischen Diamin besteht, welches 9 Kohlenstoffatome hat, wobei der Film ferner einen Phosphorsäure-Polymerisationskatalysator und einen gehinderten Phenolwärmestabilisator enthält, und eine zahlenmäßige Dichte von Fischaugen von 0,01 $mm^2$ oder größer, die im Film vorhanden sind, beträgt 100/1000 $mm^2$ oder weniger.

2. Halbaromatischer Polyamidfilm nach Anspruch 1, der ferner einen Wärmestabilisator auf Phosphorbasis umfasst.

3. Halbaromatischer Polyamidfilm nach Anspruch 2, wobei der Wärmestabilisator auf Phosphorbasis eine Verbindung ist, die durch die folgende allgemeine Formel (1) repräsentiert wird:

[Formel 1]

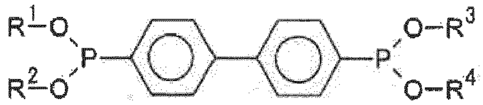

(I)

(in der Formel repräsentiert jedes $R^1$ bis $R^4$ unabhängig ein Wasserstoffatom, eine 2,4-Di-tert-butyl-5-methylphenyl-Gruppe oder eine 2,4-di-tert-butylphenyl-Gruppe.)

4. Halbaromatischer Polyamidfilm nach Anspruch 3, wobei $R^1$ bis $R^4$ der Verbindung, die durch die vorhergehende allgemeine Formel (1) repräsentiert wird, alle eine 2,4-Di-tert-butyl-5-methylphenyl-Gruppe sind.

5. Halbaromatischer Polyamidfilm nach einem der Ansprüche 1 bis 4, wobei der gehinderte PhenolWärmestabilisator eine thermische Zersetzungstemperatur bei 5 % Gewichtsverlust von 320 °C oder mehr hat, wenn mit einem Thermogravitätsanalysator gemessen.

6. Halbaromatischer Polyamidfilm nach einem der Ansprüche 1 bis 5, wobei der gehinderte PhenolWärmestabilisator eine Amidgruppe hat.

7. Halbaromatischer Polyamidfilm nach einem der Ansprüche 1 bis 6, der ferner einen Wärmestabilisator vom bifunktionellen Typ umfasst.

8. Prozess für die Herstellung des halbaromatischen Polyamidfilms nach einem der Ansprüche 1 bis 7, wobei ein geschmolzenes Polymer mehr durch Schmelzen des halbaromatischen Polyamidharzes gewonnen wird, dass geschmolzene Polymer wird durch ein metall-gesintertes Filter geschickt, das einen absoluten Filtrationsdurchmesser von 60 $\mu$m oder weniger hat, und dann wird das geschmolzene Harz zu einem Film geformt.

9. Prozess für die Herstellung des halbaromatischen Polyamidfilms nach Anspruch 8, wobei ein metallfasergesintertes Filter oder ein metallpulver-gesintertes Filter als das metall-gesinterte Filter verwendet wird.

## Revendications

1. Film de polyamide semi-aromatique comprenant une résine de polyamide semi-aromatique comprenant un acide dicarboxylique principalement composé d'acide téréphtalique et une diamine principalement composée d'une diamine aliphatique ayant 9 atomes de carbone, dans lequel le film comprend en outre un catalyseur de polymérisation de type acide phosphoreux et un stabilisant à la chaleur de type phénol encombré, et la densité en nombre d'yeux de poissons ayant une taille de 0,01 $mm^2$ ou plus présents dans le film est de 100/1000 $cm^2$ ou moins.

2. Film de polyamide semi-aromatique selon la revendication 1, comprenant en outre un stabilisant à la chaleur à base de phosphore.

3. Film de polyamide semi-aromatique selon la revendication 2, dans lequel le stabilisant à la chaleur à base de phosphore est un composé représenté par la formule générale (1) suivante :

[Formule 1]

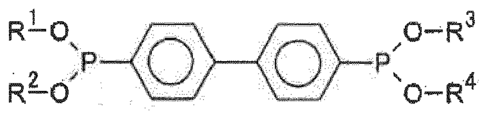

(I)

(dans la formule, $R^1$ à $R^4$ représente chacun indépendamment un atome d'hydrogène, un groupe 2,4-di-tert-butyl-5-méthylphényle ou un groupe 2,4-di-tert-butylphényle).

4. Film de polyamide semi-aromatique selon la revendication 3, dans lequel $R^1$ à $R^4$ du composé représenté par la formule générale (1) ci-dessus sont tous des groupes 2,4-di-tert-butyl-5-méthylphényle.

5. Film de polyamide semi-aromatique selon l'une quelconque des revendications 1 à 4, dans lequel le stabilisant à la chaleur de type phénol encombré a une température de décomposition thermique pour une perte de poids de 5 % de 320 °C ou plus, telle que mesurée au moyen d'un analyseur de thermogravimétrie.

6. Film de polyamide semi-aromatique selon l'une quelconque des revendications 1 à 5, dans lequel le stabilisant à la chaleur de type phénol encombré a un groupe amide.

7. Film de polyamide semi-aromatique selon l'une quelconque des revendications 1 à 6, comprenant en outre un stabilisant à la chaleur de type bifonctionnel.

8. Procédé pour la production du film de polyamide semi-aromatique selon l'une quelconque des revendications 1 à 7, dans lequel un polymère fondu est obtenu par fusion de la résine de polyamide semi-aromatique, le polymère

fondu est mis à passer à travers un filtre fritté métallique ayant un diamètre de filtration absolu de 60 μm ou moins, et ensuite la résine fondue est mise sous la forme d'un film.

**9.** Procédé pour la production d'un film de polyamide semi-aromatique selon la revendication 8, dans lequel un filtre fritté en fibres métalliques ou un filtre fritté en poudre métallique est utilisé en tant que filtre fritté métallique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9012714 A
- JP 2000186141 A